# EUROPÄISCHE PATENTANMELDUNG

(11) **EP 4 449 948 A1**
(43) Veröffentlichungstag der Anmeldung: **23.10.2024**
(21) Anmeldenummer: 24170794.2
(22) Anmeldetag: 17.04.2024
(51) Int. Cl.: A47B 13/00, F16B 12/42, F16B 12/44, A47B 13/02

(54) **VERRIEGELUNGSEINRICHTUNG MIT ZAHNSTANGENGETRIEBE UND TISCHANORDNUNG MIT ZAHNSTANGEN-VERRIEGELUNGSMECHANISMUS**

(30) Priorität: 21.04.2023 DE 102023110181
(71) Anmelder: Wilhelm Renz GmbH + Co. KG, 71034 Böblingen (DE)
(72) Erfinder: Schwingenschlögl, Alexander, 70794 Filderstadt (DE)
(74) Vertreter: Kohler Schmid Möbus Patentanwälte

(57) **Zusammenfassung**

Eine Verriegelungseinrichtung zum Verbinden eines Tischbeins mit mindestens einer Tischplatte umfassend ein erstes Verbindungsteil zur Anbringung an das Tischbein, wobei das erste Verbindungsteil mehrere Verriegelungsbolzen mit Verriegelungsvorsprüngen aufweist, ein zweites Verbindungsteil (2) zur Anordnung an einer Tischplatte, wobei das zweite Verbindungsteil (2) einen Verriegelungsmechanismus mit einem Betätigungselement (17) und einer Verriegelungsplatte (9) mit Klemmkonturen (14) aufweist, wobei die Klemmkonturen durch Betätigen des Betätigungselements (17) von einer Entriegelungsposition, in welcher die Klemmkonturen (14) der Verriegelungsplatte (9) die Verriegelungsvorsprünge der Verriegelungsbolzen nicht hintergreifen, in eine Verriegelungsposition bringbar sind, in welcher die Klemmkonturen (14) der Verriegelungsplatte (9) die Verriegelungsvorsprünge der Verriegelungsbolzen hintergreifen, ist dadurch gekennzeichnet, dass der Verrieglungsmechanismus ein Zahnstangengetriebe (15, 16) umfasst, wobei die Verriegelungsplatte (9) mittels des Zahnstangengetriebes (15, 16) linear verschiebbar ist. Hierdurch wird eine kompakte Verriegelungseinrichtung für eine Tischanordnung realisiert, die auch bei Leichtbau-Tischplatten verwendet werden kann.

## Beschreibung

### Hintergrund der Erfindung

Die Erfindung betrifft eine Verriegelungseinrichtung zum Verbinden von einem plattenartigen Werkstück mit einem Anbauteil umfassend ein erstes Verbindungsteil zur Anbringung an dem Anbauteil, wobei das erste Verbindungsteil mehrere Verriegelungsbolzen mit Verriegelungsvorsprüngen aufweist, ein zweites Verbindungsteil zur Anordnung an dem plattenartigen Werkstück, wobei das zweite Verbindungsteil einen Verriegelungsmechanismus mit einem Betätigungselement und einer Verriegelungsplatte mit Klemmkonturen aufweist, wobei die Klemmkonturen durch Betätigen des Betätigungselements von einer Entriegelungsposition, in welcher die Klemmkonturen der Verriegelungsplatte die Verriegelungsvorsprünge der Verriegelungsbolzen nicht hintergreifen, in eine Verriegelungsposition bringbar sind, in welcher die Klemmkonturen der Verriegelungsplatte die Verriegelungsvorsprünge der Verriegelungsbolzen kraftschlüssig hintergreifen.

Eine Tischanordnung mit einem Verriegelungsmechanismus an der Tischplatte ist bekannt aus [Wilkhahn].

Für Konferenzen, Tagungen und Besprechungen ist es wünschenswert, Tische oder Tischsysteme schnell und einfach auf- und abzubauen, um die Größe und Anzahl der Tische dem entsprechenden Anlass anzupassen. Dazu müssen im Allgemeinen Tischbeine montiert und/oder versetzt werden.

Aus [Renz], [Knoll], [Brunner] und [Dauphin] sind Tischanordnungen bekannt, bei denen Tischbein und Tischplatte mittels einer Verriegelungseinrichtung verbunden werden können, bei der an der Tischplatte Ausnehmungen vorgesehen sind, in welche Verriegelungselemente eingeführt und verklemmt werden können, die am Tischbein angebracht sind. Zum Verklemmen wird eine Schwenkbewegung des Hebels senkrecht zur Tischplatte mittels eines exzentrischen Getriebes oder eines Kniehebelgetriebes (Hebelgetriebe mit Totpunktüberschreitung) in eine Linearbewegung der Klemmelemente umgewandelt, wodurch eine Verriegelung bzw. Entriegelung bewirkt wird. Um im Falle eines Verschleißes der Klemmelemente trotzdem eine effektive Verklemmung zu ermöglichen werden Federelemente zum Spannen eingesetzt. Die Position des Hebels muss so konfiguriert werden, dass der Hebel in der Verriegelungsposition an der Tischplatte anliegt, da ansonsten der Hebel optisch stören würde. Bei diesen Tischanordnungen werden kleine Hebellängen eingesetzt, wodurch jedoch die Kraft, die auf die Verriegelungselemente wirken können, entsprechend begrenzt ist. Zudem besteht hier die Gefahr, dass sich Gegenstände zwischen Hebel und Tischplatte verklemmen können.

Aus [Hettich] und [Holzmedia] sind Verriegelungseinrichtungen bekannt, bei denen die am Tischbein angebrachte Verriegelungselemente mittels einer Hebelbewegung parallel zur Tischplatte bewegt werden, so dass die Stellung des Hebels unabhängig von seiner Position optisch nicht stört. Die Umwandlung der Schwenkbewegung des Hebels in eine Linearbewegung der Klemmelemente erfolgt bei [Holzmedia] ebenfalls über ein exzentrisches Getriebe, bei [Hettich] über eine geeignete Kurvenführung in der Verriegelungsplatte.

Nachteilig an all diesen bekannten Verriegelungseinrichtungen ist, dass die Konstruktion am Tischbein aufwändig und platzraubend ist.

[Wilkhahn] beschreibt eine Tischanordnung, bei der die Verriegelungsmechanik in der Tischplatte integriert ist, so dass am Tischbein lediglich Verriegelungszapfen angebracht sind. Dadurch werden zwar die Elemente der Verriegelungseinrichtung, die am Tischbein montiert sind, reduziert, jedoch benötigt die in [Wilkhahn] beschriebene Verriegelungsmechanik relativ viel Platz in der Tischplatte. Diese Verriegelungseinrichtung kann daher nur bei massiven Tischplatten zum Einsatz kommen und ist bspw. für Leichtbauplatten nicht geeignet.

### Aufgabe der Erfindung

Aufgabe der Erfindung ist es, eine kompakte Verriegelungseinrichtung insbesondere für eine Tischanordnung vorzuschlagen, die auch bei Leichtbau-Platten verwendet werden kann.

### Beschreibung der Erfindung

Diese Aufgabe wird erfindungsgemäß gelöst durch eine Verriegelungseinrichtung gemäß Anspruch 1 und eine Tischanordnung gemäß Anspruch 13.

Erfindungsgemäß umfasst der Verriegelungsmechanismus ein Zahnstangengetriebe, wobei die Verriegelungsplatte mittels des Zahnstangengetriebe linear verschiebbar ist.

Die erfindungsgemäße Verriegelungseinrichtung dient zum werkzeuglosen Montieren von Anbauteilen an plattenartigen Werkstücken, insbesondere von Tischbeinen an eine oder mehreren Tischplatten. Erfindungsgemäß wird eine 1D-Mechanik verwendet (lineare Verschiebung der Verriegelungsplatte). Beim Verriegelungsprozess liegt keine unterstützende Federkraft bezüglich der Verklemmung der Verriegelungsplatte mit den Verriegelungsbolzen an.

Durch die Zahnstangenmechanik wird die Drehbewegung des Betätigungselements in eine Linearbewegung der Verriegelungsplatte umgewandelt. Die Kraftübertragung wird durch das mit dem Zahnstangengetriebe bewirkte Übersetzungsverhältnis von Betätigungselement und Verriegelungsplatte unterstützt.

Das durch das Zahnstangengetriebe bewirkte Übersetzungsverhältnis beträgt vorzugsweise mindestens 4:1, insbesondere mindestens 6:1. Um dies zu realisieren, kann das Betätigungselement als L-förmiger Hebel ausgebildet sein, wobei das Stirnrad an der kurzen Seite des L-förmigen Betätigungselements angeordnet ist. Damit kann ein langer Betätigungsweg und somit ein großer Hub innerhalb der Verriegelung realisiert werden.

Die Zahnstangenmechanik erlaubt eine flache, leichte Geometrie, ist einfach in der Fertigung und mit wenig Kraftaufwand und/oder kleinem Hebel bedienbar. Durch die flache Ausgestaltung wiederum muss die erfindungsgemäße Verriegelungseinrichtung nicht in das plattenartige Werkstück eingelassen werden, sondern kann an der Unterseite des plattenartigen Werkstücks montiert werden, ohne optisch oder im Gebrauch zu stören. Dadurch wird es ermöglicht, die Verriegelungseinrichtung bspw. für Tischplatten aus Leichtbaumaterial, die in der Regel nicht massiv ausgestaltet sind, zu verwenden.

Vorzugsweise handelt es sich bei dem plattenartigen Werkstück um eine Tischplatte und bei dem Anbauteil um ein Tischbein.

Die Verriegelungsvorsprünge der Verriegelungsbolzen sind vorzugsweise als allseitig hinterschnittene Verriegelungsköpfe, insbesondere als Pilzköpfe, oder als 3-seitig hinterschnittene Vorsprünge ausgebildet. Vorzugsweise sind die Verriegelungsvorsprünge symmetrisch zueinander angeordnet und ragen senkrecht nach oben.

Vorzugsweise werden je Anbauteil zwei fest verschraubte Verriegelungsbolzen verwendet.

Bei der Verriegelungsplatte handelt es sich um eine relativ zum Betätigungselement und (falls vorhanden) Grundplatte und (im montiertem Zustand) relativ zum plattenartigen Werkstück) verschiebbaren Platte mit (durch Ausnehmungen definierte) Klemmkonturen zum Hintergreifen der Verriegelungsvorsprünge der Verriegelungsbolzen. Die Ausnehmungen sind für die Verriegelungsbolzen durchgängig (Durchgangsbohrungen), so dass ein Hintergreifen der Verriegelungsvorsprünge durch die Verriegelungsplatte ermöglicht wird. Die die Klemmkonturen bildenden Ausnehmungen der Verriegelungsplatte sind in ihrer Größe, Anzahl und Verteilung der Größe, Anzahl und Verteilung der Verriegelungsbolzen angepasst. Die Verriegelungsplatte ist vorzugsweise hinter einer an dem plattenartigen Werkstück fixierbaren Grundplatte angeordnet, die zusammen mit der Gegenplatte und einem Grundrahmen ein Gehäuse für die Verriegelungsplatte bildet.

Das Material der Verriegelungsplatte sollte sich von dem Material der Verriegelungsbolzen unterscheiden, um einen passenden Reibungskoeffizienten zu realisieren, der sicherstellt, dass zwischen dem Verriegelungsbolzen und der Klemmkontur eine Haftreibung wirkt, die einerseits verhindert, dass sich die Verriegelung bei ordnungsgemäßer Handhabung nicht von selbst löst und andererseits ein Öffnen der Verriegelung "mit Hand", also ohne weitere Hilfsmittel erlaubt. Bspw. können die Verriegelungsbolzen aus druckgegossenem Zink oder faserverstärktem Kunststoff sein. Die Verriegelungsplatte kann mittels Druckguss hergestellt werden.

Bei einer bevorzugten Ausführungsform der erfindungsgemäßen Verriegelungseinrichtung umfasst die Verriegelungsplatte eine Zahnstange.

Vorzugsweise handelt es sich bei dem Betätigungselement um ein mechanisches Betätigungselement, insbesondere ein verschwenkbares Hebelelement. Alternativ könnte auch ein Drehknopf als Betätigungselement verwendet werden, der jedoch, um auf dieselbe Hebelwirkung wie ein Hebel zu kommen, einen ziemlich großen Durchmesser aufweisen müsste.

Bei einer bevorzugten Ausführungsform der erfindungsgemäßen Verriegelungseinrichtung umfasst das Betätigungselement an seinem der Verriegelungsplatte zugewandten Ende ein Stirnrad. Im Falle eines Drehknopfs als Betätigungselement ist das Stirnrad am Drehknopf angebracht oder mit diesem (insbesondere mechanisch) gekoppelt.

Das zweite Verbindungsteil weist vorzugsweise eine an dem plattenartigen Werkstück befestigbare Gegenplatte auf. Es ist vorgesehen, dass die Verriegelungsplatte zwischen dem plattenartigen Werkstück und der Gegenplatte montiert wird.

Die Verriegelungsplatte weist vorzugsweise Ausnehmungen zur Aufnahme der Verriegelungsbolzen auf. Die Ausnehmungen sind dabei für die Verriegelungsbolzen frei durchgängig.

Bei einer besonders bevorzugten Ausführungsform weist die Grundplatte Aufnahmeöffnungen auf und die Verriegelungsbolzen weisen an ihrem dem Verriegelungsvorsprung abgewandten Seite ein Einpassteil auf, welches an die Form einer der Aufnahmeöffnungen der Grundplatte angepasst ist.

Form und Abmessungen des Einpassteils entsprechen der Form und Abmessungen der Aufnahmeöffnungen der Verriegelungsplatte (Querschnitt senkrecht zur Einführrichtung des Verriegelungsbolzens in die Aufnahmeöffnung). Auf diese Weise wird ein Verrutschen der Verriegelungsbolzen senkrecht zu deren Einführrichtung in den Aufnahmeöffnungen verhindert. Der Querschnitt des Verriegelungsvorsprungs hingegen ist vorzugsweise kleiner als der Querschnitt der Aufnahmeöffnung der Grundplatte, in die der Verriegelungskopf eingeführt wird, um ein einfaches Einführen zu ermöglichen.

Bei einer besonders bevorzugten Ausführungsform weisen die Verriegelungsbolzen zwischen ihrem Verriegelungsvorspung und ihrem Einpassteil eine Keilnut auf, in die in der Verrieglungsposition je eine der Klemmkonturen der Verrieglungsplatte eingreift. Die Nutbreite der Keilnut (Abstand zwischen Verriegelungsvorsprung und Einpassteil) muss so klein gewählt werden, dass beim Einsetzen der Verriegelungsbolzen des Anbauteils in das zweite Verbindungssteil ein Verfangen des Verriegelungsbolzens mit der Grundplatte nicht stattfinden kann. Die Nutbreite wird also vorzugsweise kleiner als die Materialdicke der Grundplatte gewählt.

Vorzugsweise weisen die Klemmkonturen eine schräge Anlauffläche auf, die so ausgerichtet ist, dass beim Betätigen des Betätigungselements eine Zugspannung zwischen dem ersten und zweiten Verbindungsteil aufgebaut wird. Die Klemmkonturen sind also keilförmig. Vorzugsweise ist der Querschnitt der Klemmkonturen U- oder V-förmig, so dass sie den Verriegelungsbolzen auf drei Seiten hintergreifen können.

Ebenso ist es vorteilhaft, wenn die Verriegelungsvorsprünge der Verriegelungsbolzen keilförmige Klemmkanten aufweisen, d.h. wenn die dem Einpassteil zugewandte Kante des Verriegelungsvorsprungs (Klemmkante) nicht parallel zu der dem Vorsprung zugewandten Kante des Einpassteils angeordnet ist. Auf diese Weise bildet sich zwischen dem Einpassteil und dem Verriegelungsvorsprung eine Keilnut aus. Die Kanten der Klemmkontur der Verriegelungsplatte greifen in die Verriegelungsbolzen ein und stützen sich auf diesen ab. Die keilförmigen Klemmkonturen sorgen für einen stetigen Kontakt zwischen Verriegelungsplatte und Grundplatte.

Bei einer besonders bevorzugten Ausführungsform ist eine Wegreserve der Verriegelungsplatte vorgesehen. Dazu ist das Betätigungselement und das Zahnstangengetriebe so aufeinander abgestimmt, dass in der Verriegelungsposition der Bewegungsspielraum des Betätigungselements und der Verriegelungsplatte nicht vollständig ausgeschöpft ist. Vorzugsweise beträgt die Wegreserve mindestens 15%, vorzugsweise mindestens 20%. Bei einem Hebelelement mit Bewegungsspielraum von beispielsweise 90° beträgt die Wegreserve vorzugsweise ca. 20°. Das Betätigungselement kann also theoretisch über die Verriegelungsposition hinaus bewegt werden.

Dabei ist es wichtig, dass in der Verriegelungsposition eine schräg zur Bewegungsrichtung der Klemmkontur orientierte Kante der Klemmkontur vom Nutgrund der Keilnut beabstandet ist. Die Klemmkontur umfasst dazu vorzugsweise drei Kanten (eine zentrale, vorzugsweise (im Wesentlichen) senkrecht zur der Klemmkontur orientierte Kante, und zwei seitliche, vorzugsweise (im Wesentlichen) parallel zur der Klemmkontur orientierte, Kanten), die in die Keilnut eingreifen. In der Verriegelungsposition befinden sich die seitlichen Kanten vorzugsweise dicht am Nutgrund, während die zentrale Kante vom Nutgrund beabstandet ist und im Wesentlichen am Nuteingang verklemmt wird. Die Klemmverbindung hat dadurch eine Wegreserve, so dass trotz einer ev. später auftretenden Materialabtragung (Verschleiß) das Betätigungselement weiter gespannt und das Anbauteil wackelfrei montiert werden kann. Bei dieser Ausführungsform der erfindungsgemäßen Verriegelungseinrichtung gibt es also keinen definierten Endpunkt der Verriegelungsposition. Dadurch wird im Zusammenspiel mit dem durch die Keilwirkung erzeugten Anpressdruck eine jederzeit erreichbare solide Klemmwirkung gewährleistet - auch bei fortschreitendem Verschleiß. Das System ist auf Grund dieser Verschleißtoleranz langlebig und nachhaltig.

Eine spezielle Ausführungsform sieht vor, dass die Verriegelungsplatte in der Entriegelungsposition und/oder in einer Sicherungsposition, in der die Klemmkontur den Verriegelungsvorsprung vollständig hintergreift, arretiert ist, insbesondere durch Einrasten eines Federelements in eine Rastausnehmung der Verriegelungsplatte. Beim Verfahren der Verriegelungsplatte von der Entriegelungsposition in die Verriegelungsposition hintergreift die Verriegelungsplatte die Verriegelungsvorsprünge in der Sicherungsposition (s.u.) zunächst formschlüssig (d.h. Verriegelungsplatte hintergreift die Verriegelungsvorsprünge auf der gesamten Länge des Verriegelungsbolzens, wobei Länge des Verriegelungsbolzens die Abmessung in Richtung der Bewegungsrichtung der Verriegelungsplatte meint), dann kraftschlüssig (Verriegelungsposition). In der Sicherungsposition wird somit eine Bewegung des Verriegelungsbolzens aus der Aufnahmeöffnung der Grundplatte heraus verhindert; in der Verriegelungsposition können sich die Klemmkanten der Verriegelungsbolzen und die Klemmkontur der Verriegelungsplatte effektiv verkeilen. Die Verrastung in der Sicherungsposition signalisiert dem Anwender, dass die zu verbindenden Teile nicht mehr auseinanderfallen können.

Damit auch für den Fall, dass nur ein Verriegelungsbolzen in das zweite Verbindungsteil eingreift, ein ausreichender Anpressdruck entsteht, weist das zweite Verbindungteil vorzugsweise eine Führungsvorrichtung zur linearen Führung der Verriegelungsplatte auf. Diese kann z.B. in Form von Langnuten in der Verriegelungsplatte und in die Langnuten eingreifende Führungsbolzen ausgebildet sein.

Die Erfindung betrifft auch eine Tischanordnung mit mindestens einer Tischplatte, mindestens einem Tischbein, und einer zuvor beschriebenen Verriegelungseinrichtung, wobei stirnseitig am oberen Ende des Tischbeins ein erstes Verbindungsteil angeordnet/befestigt ist, das mehrere Verriegelungsbolzen mit Verriegelungsvorsprüngen aufweist, wobei an der Tischplatte ein zweites Verbindungsteil angeordnet/befestigt ist, das einen Verriegelungsmechanismus mit einem Betätigungselement und einer Verriegelungsplatte mit Klemmkonturen aufweist, wobei die Klemmkonturen durch Betätigen des Betätigungselements von einer Entriegelungsposition, in welcher die Klemmkonturen der Verriegelungsplatte die Verriegelungsvorsprünge der Verriegelungsbolzen nicht hintergreifen, in eine Verriegelungsposition bringbar sind, in welcher die Klemmkonturen der Verriegelungsplatte die Verriegelungsvorsprünge der Verriegelungsbolzen hintergreifen und wobei der Verrieglungsmechanismus ein Zahnstangengetriebe umfasst, wobei die Verriegelungsplatte mittels des Zahnstangengetriebes relativ zur Tischplatte linear verschiebbar ist.

Das "obere Ende" des Tischbeins ist das der Tischplatte zugewandte Ende des Tischbeins. Das zweite Verbindungsteil ist an/auf der Unterseite (also der dem Tischbein zugewandte Seite der Tischplatte) angeordnet, vorzugsweise auf der Unterseite der Tischplatte montiert.

Vorzugsweise ist das Betätigungselement ein verschwenkbares Hebelelement, welches um eine Schwenkachse vorzugsweise senkrecht zur Tischplatte verschwenkbar ist. Die Verschwenkung des Hebelelements und das Verfahren der Verriegelungsplatte erfolgen also in derselben Ebene (parallel zur Tischplatte bzw. senkrecht zur Verschieberichtung der Verriegelungsplatte).

Vorzugsweise liegt das Hebelelement in der Entriegelungsposition an dem zweiten Verbindungsteil an. Ein am Gehäuse anliegender Hebel signalisiert also die Verriegelungsposition "offen" und ist für den Nutzer im Gebrauch somit leicht erkennbar.

Vorzugsweise ist das der Verriegelungsplatte abgewandte Ende des Betätigungselements, insbesondere am Hebelgriff, gepolstert. Auf diese Weise können mehrere Tische gestapelt werden, ohne dass die Tischplatte des unteren Tisches vom Betätigungselement verkratzt wird (Stapelpuffer).

Eine Tischplatte kann mittels der erfindungsgemäßen Verriegelungseinrichtung einzeln mit Beinen ausgestattet werden, es können aber auch mehrere aneinandergrenzende Tischplatten an deren Stoßkante tischplattenverbindend verkettet werden. Eine besonders bevorzugte Ausführungsform der erfindungsgemäßen Tischanordnung umfasst daher mindestens zwei Tischplatten, wobei in der Verriegelungsposition die Verriegelungsplatte des zweiten Verbindungsteils der ersten Tischplatte und die Verriegelungsplatte der Verriegelungseinrichtung der zweiten Tischplatte Verriegelungsbolzen desselben Tischbeins hintergreifen.

Die Tischplatten weisen jeweils mindestens eine Tischkante, die parallel zueinander auf Stoß angeordnet werden können, auf. Jede Tischplatte ist mit einem zweiten Verbindungsteil ausgestattet. Die zweiten Verbindungsteile sind geometrisch derart ausgerichtet, dass ein Teil der Verriegelungsbolzen des ersten Verbindungsteils in das zweite Verbindungsteil der ersten Tischplatte eingreifen und ein anderer Teil der Verriegelungsbolzen des ersten Verbindungsteils in das zweite Verbindungsteil der zweiten Tischplatte eingreifen können und durch die jeweiligen Verriegelungsplatte verklemmt werden können.

Vorzugsweise sind zwei jeweils ein erstes Verbindungsteil aufweisende Tischbeine zu einer Tischbeinanordnung miteinander verbunden.

Die Tischbeine und die ersten Verbindungsteile sind vorzugsweise so gegeneinander ausgerichtet, dass die Tischbeine in einem Winkel von 105° an der(den) Tischplatte(n) montierbar sind. Dadurch können optisch ansprechende, zerlegbare Sitztisch- und Stehtischanordnungen realisiert werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt ein Teil eines Tischbeins mit einem ersten Verbindungsteil einer erfindungsgemäßen Verriegelungseinrichtung mit Verriegelungsbolzen mit allseitig umlaufender Klemmnut.
- Fig. 2: zeigt ein Teil eines Tischbeins mit einem ersten Verbindungsteil einer erfindungsgemäßen Verriegelungseinrichtung mit Verriegelungsbolzen mit dreiseitig umlaufender Klemmnut.
- Fig. 3: zeigt eine Vorderansicht und eine Seitenansicht eines Verriegelungsbolzens mit dreiseitig umlaufender Klemmnut.
- Fig. 4: zeigt eine perspektivische Ansicht des zweiten Verbindungsteils aus Fig. 3 in Entriegelungsposition.
- Fig. 5: zeigt eine Draufsicht einer Klemmkontur des zweiten Verbindungsteils aus Fig. 4.
- Fig. 6a: zeigt einen Längsschnitt eines in der Grundplatte des zweiten Verbindungsteils aus Fig. 4 eingeführten Verriegelungsbolzens aus Fig. 1b in Sicherungsposition.
- Fig. 6b: zeigt einen Längsschnitt eines in der Grundplatte des zweiten Verbindungsteils aus Fig. 4 eingeführten verklemmten Verriegelungsbolzens aus Fig. 1b in Verriegelungsposition.
- Fig. 7: zeigt eine Seitenansicht einer erfindungsgemäßen Tischanordnung mit einem eine erste Tischplatte überlappend angebrachten Tischbein zur Verbindung mit einer weiteren Tischplatte.

Die erfindungsgemäße Verriegelungseinrichtung umfasst ein erstes Verbindungsteil **1** und ein zweites Verbindungsteil **2**, die über einen Verriegelungsmechanismus im zweiten Verbindungsteil **2** miteinander verbunden werden können. Zum Erstellen einer erfindungsgemäßen Tischanordnung ist das erste Verbindungsteil an einem Tischbein **3** und das zweite Verbindungsteil an einer Tischplatte **8** befestigt.

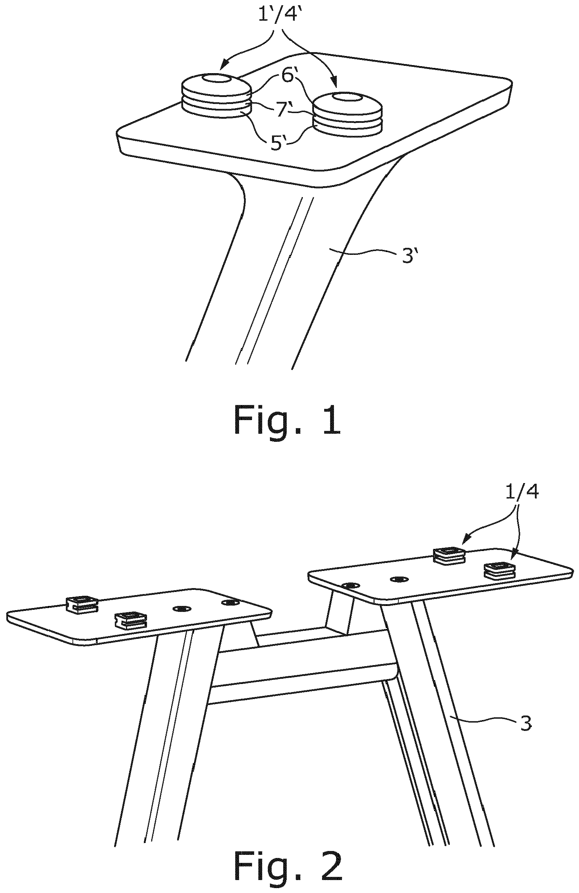

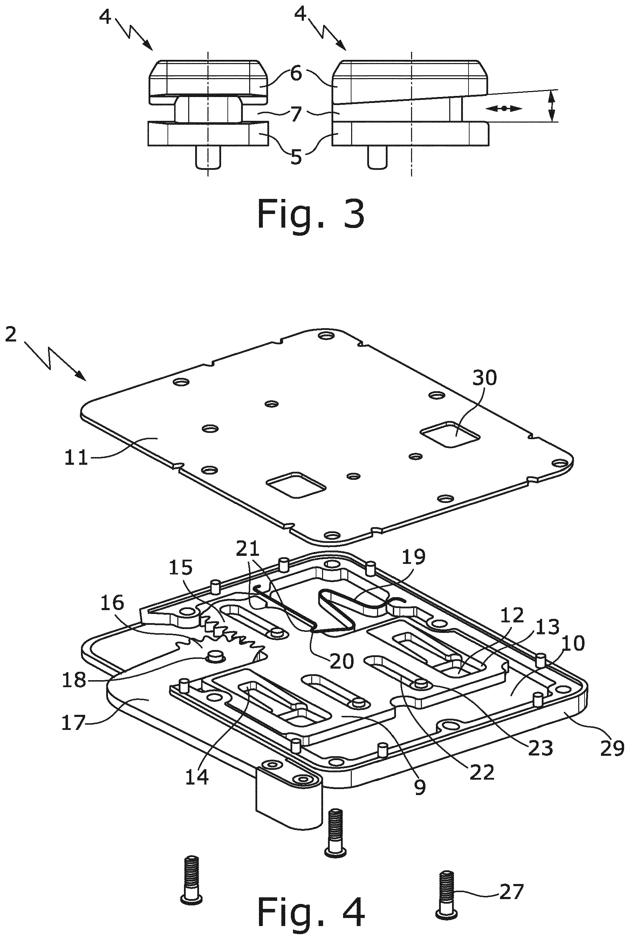

**Fig. 1** **+** **Fig. 2** zeigen jeweils ein an einem Tischbein 3, 3' angebrachtes erste Verbindungsteil **1, 1**'. Das erste Verbindungsteil 1, 1' umfasst zwei Verriegelungsbolzen **4, 4'** mit einem Einpassteil **5, 5'**, einem Verriegelungsvorsprung **6, 6'**, und einer dazwischenliegenden Klemmnut **7, 7'**. Während die in Fig. 1 gezeigten Verriegelungsvorsprünge 6' und Einpassteile 5' einen kreisförmigen Querschnitt aufweisen und die Klemmnut 7' allseitig umlaufend verläuft, weist das Einpassteil 5 und der Verriegelungsvorsprung 6 des Verriegelungsbolzens 4 aus Fig. 2, der in **Fig. 3** detaillierter dargestellt ist, einen rechteckigen Grundriss auf und die Klemmnut 7 erstreckt sich nur über drei Seiten des Verriegelungsbolzens 4. Der Verriegelungsvorsprung 6 ist keilförmig, derart, dass die Dicke zu der Seite, an der die Keilnut 6 nicht verläuft zunimmt. In Kombination mit dem Einpassteil 5, mit gleichbleibender Dicke, ergibt sich eine keilförmige Klemmnut 7. Das in Fig. 2 dargestellt Tischbein 3 ist über ein Verbindungsstück mit einem weiteren Tischbein zu einer Tischbeinanordnung verbunden, so dass zwei Tischbeine gleichzeitig montiert werden können. Dabei sind die Verriegelungsbolzen 4 der beiden Tischbeine 3 spiegelsymmetrisch zueinander angeordnet, so dass die Seiten der Verriegelungsbolzen 4, um die die Keilnut 7 nicht verläuft, zu den Verriegelungsbolzen 4 des jeweils anderen Tischbeins 3 abgewandt angeordnet sind. Die Seiten der Verriegelungsbolzen 4 des ersten Tischbeins 3 mit der größten Öffnung der Keilnut liegen also den Seiten der Verriegelungsbolzen 4 des zweiten Tischbeins 3 mit der größten Öffnung der Keilnut gegenüber.

**Fig. 4** zeigt das zweite Verbindungsteil 2, das dafür vorgesehen ist, über Verbindungsmittel **27** an der Unterseite einer Tischplatte 8 (in Fig. 4 nicht gezeigt) montiert zu werden. Das zweite Verbindungsteil 2 umfasst eine Verriegelungsplatte **9**, die in einem Gehäuse 10, 11, 29 aus einem Grundrahmen **29**, einer Grundplatte **10** und einer Gegenplatte **11** untergebracht ist. Die Gegenplatte 11 dient zur Anlage an der Unterseite des Tisches. Die Grundplatte 10 dient zur Aufnahme der Verriegelungsbolzen 4 des ersten Verbindungsteils 1 und weist entsprechende Aufnahmeöffnungen **12** auf. Die Verriegelungsplatte 9 ist relativ zum Gehäuse 10, 11, 29 verschiebbar und weist ebenfalls Ausnehmungen **13** zur Aufnahme der Verriegelungsbolzen 4 sowie Klemmkonturen **14** auf. Darüber hinaus weist auch die Gegenplatte 11 Ausnehmungen 30 zur Aufnahme der Verriegelungsbolzen 4 auf, wodurch die Höhe der Anordnung weiter reduziert werden kann. Über ein Zahnstangengetriebe 15, 16 kann die Verriegelungsplatte 9 relativ zum Gehäuse 10, 11, 29 zwischen einer Entriegelungsposition und einer Verriegelungsposition verschoben werden. Dazu weist die die Verriegelungsplatte 9 eine Zahnstange **15** auf, in deren Zähne die Zähne eines Stirnrads **16** eingreifen, welches Teil eines (hier als Hebel **17** ausgebildeten) Betätigungselements ist. Bei Betätigung des Hebels 17 wird das Stirnrad 16 um eine Achse **18** rotiert. In Fig. 4 befindet sich die Verriegelungsplatte 9 in Entriegelungsposition, in der die Klemmkontur 14 die Aufnahmeöffnungen 12 der Grundplatte 10 nicht überdeckt. Der Hebel 17 liegt in der Entriegelungsposition am Gehäuse 10, 11, 29 des zweiten Verbindungsteils 2 an und signalisiert damit die Entriegelungsposition. Somit kann die Entriegelungsposition einfach erkannt werden.

Bei der in Fig. 4 dargestellten Ausführungsform weist das zweite Verbindungsteil 2 ein Federelement **19** mit einer Rastnase **20** sowie Rastausnehmungen **21** in der Verriegelungsplatte 9 auf, wobei in der Entriegelungsposition bzw. der Sicherungsposition (also sobald die Klemmkontur den Verriegelungsvorsprung formschlüssig auf ganzer Länge hintergreift) die Rastnase 20 in jeweils eine der Rastausnehmungen 21 eingreift. Auf diese Weise ist die Verriegelungsplatte 9 gegen Verrutschen senkrecht zur Bewegungsrichtung der Verriegelungsplatte 9 arretiert. Das Federelement 19 dient lediglich der Arretierung und wirkt nicht auf die Verklemmung des Verriegelungsmechanismus.

Die Führung der Verriegelungsplatte 9 erfolgt in der in Fig. 4 gezeigten Ausführungsform über Langnuten **22** in der Verriegelungsplatte 9 und über an der Grundplatte 10 fixierte Lagerringe **23.**

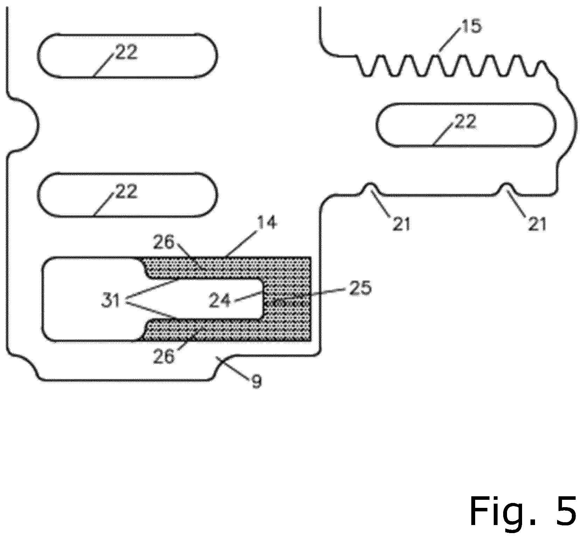

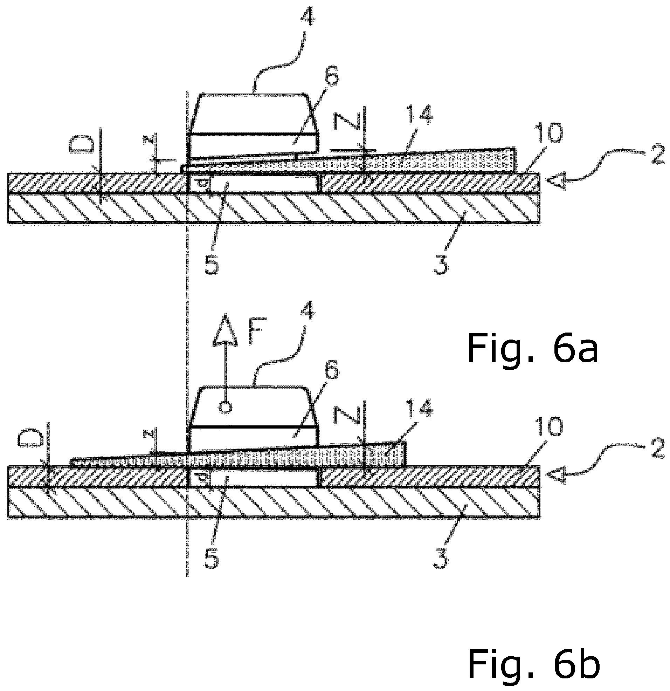

**Fig. 5** zeigt eine Draufsicht eines Ausschnitts der Verriegelungsplatte 9 mit der Klemmkontur 14. Die Klemmkontur 14 weist einen zentralen Abschnitt **25** mit einer zentrale Kante **24** und zwei seitlichen Armabschnitten **26** mit seitlichen Kanten **31** auf. Die zentrale Kante 24 verläuft in dem in Fig. 6 gezeigten Beispiel senkrecht zur Verfahrrichtung x der Verriegelungsplatte 9. Im Prinzip kann die Klemmkante auch gebogen oder V-förmig sein.

Zum Verbinden von Tischbein 3 und Tischplatte 8 werden die Verriegelungsbolzen 4 am Tischbein 3 durch die Aufnahmeöffnungen 12 der Grundplatte 10 in die Ausnehmungen 13 der Verriegelungsplatte 9 gesteckt, während sich die Verriegelungsplatte 9 in Entriegelungsposition befindet. Durch Betätigen des Betätigungselements 17 vom Gehäuse 10, 11, 29 des zweiten Verbindungsteils 2 weg wird die Klemmkontur 14 der Verriegelungsplatte 9 durch die Zahnstangenmechanik 15, 16 in die Klemmnut 7 des Verriegelungsbolzens 4 bewegt, solange bis die Klemmkontur 14 die gesamte Länge des Verriegelungsvorsprungs 6 zunächst formschlüssig, dann kraftschlüssig hintergreift (Verriegelungsposition).

**Fig. 6a und Fig. 6b** zeigen Längsschnitte eines in der Grundplatte 10 des zweiten Verbindungsteils 2 eingeführten verklemmten Verriegelungsbolzens 4. Fig. 6a zeigt die erfindungsgemäß Verriegelungseinrichtung in Sicherungsposition, in der die Klemmkontur 14 den Verriegelungsvorsprung gerade vollständig hintergreift, während Fig. 6b die erfindungsgemäß Verriegelungseinrichtung in Verriegelungsposition zeigt, in der die Klemmkontur 14 den Verriegelungsvorsprung kraftschlüssig hintergreift (Kraft F wirkt auf Verriegelungsbolzen 4), so dass der Verriegelungsbolzen gegen das zweite Verbindungsteil 2 gedrückt wird.

Die Form und die Abmaße des Querschnitts des Einpassteils 5 sind an die Form und die Abmaße der Aufnahmeöffnung 12 in der Grundplatte 10 angepasst, so dass das Einpassteil 5 formschlüssig in die Grundplatte 10 eingebracht werden kann. Die Eingangsbreite **Z** der Keilnut 7 (Breite der Keilnut 7 im Bereich des Eintritts der Klemmkontur 14 in die Keilnut 7) bzw. die Ausgangsbreite **z** der Keilnut 7 (Breite der Keilnut 7 im Bereich des Austritts der Klemmkontur 14 aus der Keilnut 7) sollte so klein gewählt werden, dass beim Einsetzen des Tischbeins 3 in die Tischplatte 8 (in Fig. 6 nicht gezeigt) ein Verfangen der Keilnut 7 mit der Grundplatte 10 verhindert wird. Im Falle einer Tischbeinanordnung wie in Fig. 2 gezeigt, bei der die Verriegelungsbolzen 4 der beiden miteinander verbundenen Tischbeine 3 achsensymmetrisch zueinander angeordnet sind und die Nuteingänge (breite Öffnungen der Nuten mit Eingangsbreite Z) zueinander zeigen, ist es ausreichend, wenn die Ausgangsbreite z der Keilnut 7 im Bereich des Nutgrunds kleiner ist als die Materialdicke D der Grundplatte 10. In diesem Fall verhindern die nicht mit einer Nut versehenen Seiten der gegenüberliegenden Verriegelungsbolzen das Eindringen der Grundplatte 10 in die breite Eingangsöffnung der Keilnut 7. Im Falle eines einzelnen Tischbeins 3 und/oder von Verriegelungsbolzen 4', die eine allseits umlaufende Nut 7' aufweisen wie in Fig. 1 gezeigt, sollte die Eingangsbreite **Z** der Keilnut 7' kleiner sein als die Materialdicke D der Grundplatte 10.

Die Dicke d des Einpassteils 5 sollte kleiner als die Dicke D der Grundplatte 10 gewählt werden. Dadurch stützt sich beim Verriegeln die Klemmkontur 14 der Verriegelungsplatte 9 auf der Grundplatte 10 ab und drückt gegen den Verriegelungsvorsprung 6 ohne das Einpassteil 5 zu berühren. Auf diese Weise wird der Verriegelungsbolzen 4 und das daran befestigte Tischbein 3 fest in das zweite Verriegelungsteil 2 gedrückt.

Der Querschnitt des Verriegelungsvorsprungs 6 ist zumindest abschnittsweise kleiner als der Querschnitt der Aufnahmeöffnung 12 in der Grundplatte 10, so dass ein einfaches Einführen des Verriegelungsbolzens 4 in die Aufnahmeöffnung 12 ermöglicht wird.

Die Klemmkontur 14 der Verriegelungsplatte 9 greift in die keilförmige Klemmnut 7 ein und ist ebenfalls keilförmig. Der Keilwinkel der Klemmkontur 14 und der Klemmnut 7 sind dabei identisch, so dass eine großflächige Klemmfläche realisiert wird.

Auf diese Weise kann die Klemmkontur 14 auch dann effektiv in der Klemmnut 7 verklemmt werden, wenn die Klemmkontur 14 und/oder die Klemmnut 7 durch Materialabtrag abgenutzt wurden.

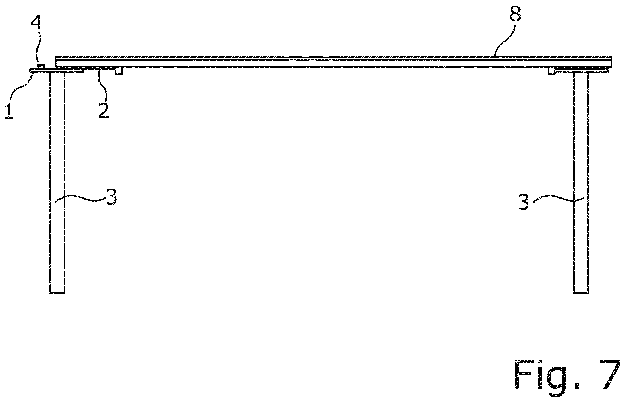

**Fig. 7** zeigt eine Seitenansicht einer erfindungsgemäßen Tischanordnung mit einer ersten Tischplatte 8, die mit einer zweiten Tischplatte (nicht gezeigt) verbunden werden soll. Dazu wird das erste Verbindungselement 1 Tischplattenübergreifend angeordnet, so dass das erste Verbindungselement 1 die erste Tischplatte 8 überlappt. Die Tischplatten 8 sind jeweils mit zweiten Verbindungteilen 2 ausgestattet. Von dem ersten, überlappend angeordneten Verbindungselement wird lediglich ein Verriegelungsbolzen 4 in einer der Aufnahmeöffnungen der auf der ersten Tischplatte 8 angeordneten Grundplatte und in die Ausnehmung in Verriegelungsplatte des zweiten Verbindungselements 2 eingeführt. Der andere Verriegelungsbolzen 4 wird in einer der Aufnahmeöffnungen der Gegenplatte und in die entsprechende Ausnehmung der Verriegelungsplatte des auf der zweiten Tischplatte angeordneten zweiten Verbindungselements eingeführt. Somit bleibt bei tischplattenverbindender Anwendung der erfindungsgemäßen Verriegelungseinrichtung je eine Aufnahmeöffnung des zweiten Verbindungsteil 2 immer frei.

Der erfindungsgemäße Mechanismus ist in jedem Fall sehr flach und bietet gleichzeitig Raum für einen großen Hebel unter der Tischplatte, mit dem eine entsprechend starke Kraft aufgebaut werden kann.

### Bezugszeichenliste

- 1, 1': erstes Verbindungsteil
- 2: zweites Verbindungsteil
- 3: Tischbein
- 4, 4': Verriegelungsbolzen
- 5, 5': Einpassteil
- 6, 6': Verriegelungsvorsprung
- 7, 7': Klemmnut
- 8: Tischplatte
- 9: Verriegelungsplatte
- 10: Grundplatte des Gehäuses
- 11: Gegenplatte des Gehäuses
- 12: Aufnahmeöffnung in Grundplatte
- 13: Ausnehmung in Verriegelungsplatte
- 14: Klemmkontur
- 15: Zahnstange der Verriegelungsplatte
- 16: Stirnrads des Betätigungselements
- 17: Betätigungselements (Hebel)
- 18: Betätigungsachse/Schwenkachse
- 19: Federelement
- 20: Rastnase
- 21: Rastausnehmungen
- 22: Langnut
- 23: Lagerring
- 24: zentrale Kante der Klemmkontur
- 25: zentraler Abschnitt der Klemmkontur
- 26: Armabschnitt der Klemmkontur
- 27: Verbindungsmittel
- 29: Grundrahmen des Gehäuses
- 30: Ausnehmung in Gegenplatte
- 31: seitlichen Kanten der Klemmkontur
- z: Höhe der Keilnut im Bereich des Nutgrunds (Ausgangsbreite der Keilnut)
- Z: Höhe der Keilnut im Bereich des Nuteingangs (Eingangsbreite der Keilnut)
- D: Materialdicke der Grundplatte
- d: Dicke des Einpassteils

### Literaturliste

| | |
|---|---|
| [Wilkhahn] | EP0458042B1 |
| [Renz] | DE202013100589U1 |
| [Knoll] | EP3251554 |
| [Brunner] | EP1915923A2 |
| [Dauphin] | DE000029916465U1 |
| [Hettich] | DE202006007300U1 |
| [Holzmedia] | DE102018206610A1 |

## Patentansprüche

1. Verriegelungseinrichtung zum Verbinden eines plattenartigen Werkstücks (3) mit mindestens einem Anbauteil (8) umfassend
ein erstes Verbindungsteil (1; 1') zur Anbringung an dem Anbauteil (3), wobei das erste Verbindungsteil (1; 1') mehrere Verriegelungsbolzen (4, 4') mit Verriegelungsvorsprüngen (6, 6') aufweist,
ein zweites Verbindungsteil (2) zur Anordnung an einem plattenartigen Werkstück (8), wobei das zweite Verbindungsteil (2) einen Verriegelungsmechanismus mit einem Betätigungselement (17) und einer Verriegelungsplatte (9) mit Klemmkonturen (14) aufweist,
wobei die Klemmkonturen (14) durch Betätigen des Betätigungselements (17) von einer Entriegelungsposition, in welcher die Klemmkonturen (14) der Verriegelungsplatte (9) die Verriegelungsvorsprünge (6; 6') der Verriegelungsbolzen (4; 4') nicht hintergreifen, in eine Verriegelungsposition bringbar sind, in welcher die Klemmkonturen (14) der Verriegelungsplatte (9) die Verriegelungsvorsprünge (6; 6') der Verriegelungsbolzen (4; 4') kraftschlüssig hintergreifen,
**dadurch gekennzeichnet,**
**dass** der Verrieglungsmechanismus ein Zahnstangengetriebe (15, 16) umfasst, wobei die Verriegelungsplatte (9) mittels des Zahnstangengetriebes (15, 16) linear verschiebbar ist.

2. Verriegelungseinrichtung nach Anspruch 1, **dadurch gekennzeichnet, dass** die Verriegelungsplatte (9) eine Zahnstange (15) umfasst.

3. Verriegelungseinrichtung nach einem der vorhergehenden Ansprüche, **dadurch gekennzeichnet, dass** das Betätigungselement (17) ein verschwenkbares Hebelelement ist, welches an seinem der Verriegelungsplatte (9) zugewandten Ende ein Stirnrad (16) umfasst.

4. Verriegelungseinrichtung nach einem der vorhergehenden Ansprüche, **dadurch gekennzeichnet, dass** das zweite Verbindungsteil (2) eine an dem plattenartigen Werkstück (8) befestigbare Grundplatte (10) aufweist.

5. Verriegelungseinrichtung nach einem der vorhergehenden Ansprüche, **dadurch gekennzeichnet, dass** die Verriegelungsplatte (9) Aufnahmeausnehmungen (13) zur Aufnahme der Verriegelungsbolzen (4; 4') aufweist.

6. Verriegelungseinrichtung nach einem der vorhergehenden Ansprüche, **dadurch gekennzeichnet, dass** die Grundplatte (10) Aufnahmeöffnungen (12) aufweist und dass die Verriegelungsbolzen (4; 4') an ihren dem Verriegelungsvorsprung (6; 6') abgewandten Enden ein Einpassteil (5; 5') aufweisen, welches an die Form einer der Aufnahmeöffnungen (12) der Grundplatte (9) angepasst ist.

7. Verriegelungseinrichtung nach einem der vorhergehenden Ansprüche, **dadurch gekennzeichnet, dass** die Verriegelungsbolzen (4; 4') zwischen ihrem Verriegelungsvorsprung (6; 6') und ihrem Einpassteil (5; 5') eine Keilnut (7, 7') aufweisen, in die in der Verriegelungsposition je eine der Klemmkonturen (14) der Verrieglungsplatte (9) eingreift.

8. Verriegelungseinrichtung nach einem der vorhergehenden Ansprüche, **dadurch gekennzeichnet, dass** die Klemmkonturen (14) eine schräge Anlauffläche aufweisen, die so ausgerichtet ist, dass beim Betätigen des Betätigungselements (17) eine Zugspannung zwischen dem ersten Verbindungsteil (1) und zweiten Verbindungsteil (2) aufgebaut wird.

9. Verriegelungseinrichtung nach einem der vorhergehenden Ansprüche, **dadurch gekennzeichnet, dass** die Verriegelungsvorsprünge (6; 6') der Verriegelungsbolzen (4; 4') keilförmige Klemmkanten aufweisen.

10. Verriegelungseinrichtung nach einem der vorhergehenden Ansprüche, **dadurch gekennzeichnet, dass** in der Verriegelungsposition eine Kante (24) der Klemmkontur (14) vom Nutgrund der Keilnut (7) beabstandet ist.

11. Verriegelungseinrichtung nach einem der vorhergehenden Ansprüche, **dadurch gekennzeichnet, dass** die Verriegelungsplatte (9) in der Entriegelungsposition und/oder in einer Sicherungsposition, in der die Klemmkontur (14) den Verriegelungsvorsprung (6) vollständig hintergreift arretiert ist, insbesondere durch Einrasten eines Federelements (19) in eine Rastausnehmung (21) der Verriegelungsplatte (9).

12. Verriegelungseinrichtung nach einem der vorhergehenden Ansprüche, **dadurch gekennzeichnet, dass** das zweite Verbindungteil (2) eine Führungsvorrichtung (22, 23) zur linearen Führung der Verriegelungsplatte (9) aufweist.

13. Tischanordnung mit mindestens einer Tischplatte (8), mindestens einem Tischbein (3), und einer Verriegelungseinrichtung nach einem der vorhergehenden Ansprüche
wobei stirnseitig am oberen Ende des Tischbeins (3) ein erstes Verbindungsteil (1) angeordnet ist, das mehrere Verriegelungsbolzen (4; 4') mit Verriegelungsvorsprüngen (6; 6') aufweist,
wobei an der Tischplatte (8) ein zweites Verbindungsteil (2) angeordnet ist, das einen Verriegelungsmechanismus mit einem Betätigungselement (17) und einer Verriegelungsplatte (9) mit Klemmkonturen (14) aufweist,
wobei die Klemmkonturen (14) durch Betätigen des Betätigungselements (17) von einer Entriegelungsposition, in welcher die Klemmkonturen (14) der Verriegelungsplatte (17) die Verriegelungsvorsprünge (6; 6') der Verriegelungsbolzen (4; 4') nicht hintergreifen, in eine Verriegelungsposition bringbar sind, in welcher die Klemmkonturen (14) der Verriegelungsplatte (9) die Verriegelungsvorsprünge (6; 6') der Verriegelungsbolzen (4; 4') kraftschlüssig hintergreifen,
**dadurch gekennzeichnet,**
**dass** der Verriegelungsmechanismus ein Zahnstangengetriebe (15, 16) umfasst, wobei die Verriegelungsplatte (9) mittels des Zahnstangengetriebes (15, 16) relativ zur Tischplatte (8) linear verschiebbar ist.

14. Tischanordnung nach einem der vorhergehenden Ansprüche, **dadurch gekennzeichnet, dass** das Betätigungselement (17) ein verschwenkbares Hebelelement ist, welches um eine Schwenkachse (18) vorzugsweise senkrecht zur Tischplatte (8) verschwenkbar ist.

15. Tischanordnung nach einem der vorhergehenden Ansprüche mit mindestens zwei Tischplatten (8), wobei in der Verriegelungsposition die Verriegelungsplatte (9) des zweiten Verbindungsteils (2) der ersten Tischplatte (8) und die Verriegelungsplatte des zweiten Verbindungsteils der zweiten Tischplatte Verriegelungsbolzen (4; 4') desselben ersten Verbindungsteils des Tischbeins kraftschlüssig hintergreifen.
